# EUROPEAN PATENT APPLICATION

(11) **EP 4 616 714 A1**
(43) Date of publication of application: **17.09.2025**
(21) Application number: 24163656.2
(22) Date of filing: 14.03.2024
(51) Int. Cl.: A21B 3/02, E05F 15/00, F24C 7/08, F24C 15/02

(54) **ASSISTED OPENING OF AN OVEN DOOR**

(71) Applicant: Electrolux Professional S.p.A., 33170 Pordenone (IT)
(72) Inventor: CORAI, Loris, 33170 Pordenone (IT); BENVENUTI, Davide, 33170 Pordenone (IT); AGNOLET, Freddie, 33170 Pordenone (IT); BARALDO, Dino Willy, 33170 Pordenone (IT)
(74) Representative: AWA Sweden AB

(57) **Abstract**

Disclosed herein is an oven door opening arrangement (100) for assisted opening of an oven door (200) in relation to an oven body (210), said oven door opening arrangement (100) comprising a sensor (110) configured to detect a state of the oven door (200), said state being switchable between a locked state and an unlocked state, a control unit (120) connected to the sensor (110) and configured to control an operation of the oven door opening arrangement (100), a door opening unit (130) comprising a drive unit (140) and an actuating unit (150), wherein the control unit (120) is configured to, based on an input from the sensor (110), control the door opening unit (130) to turn the oven door (200) around at least one hinge (220) when the state detected by the sensor (110) is the unlocked state.

## Description

### Technical field

The invention generally relates to oven doors and, more specifically, to an arrangement and a method for assisted opening of an oven door.

### Background

Today in professional kitchens, the doors of different kitchen appliances are typically opened and closed manually by an operator. To open the door of an oven, for example, a handle mounted on the door is tilted or rotated, to unlock a hatch locking and thereby releasing the door. When the door is unlocked and released, the operator may pull the handle to open the door, which will open with hinges up to between 90 to 120 degrees. The manual opening and closing of the door may cause problems if the operator holds a tray or in any other way has their hands full. In that case, the operator has to put down the tray or hold it in one hand, which increases the risk of spilling the contents on the tray. A further problem is that if an inattentive operator opens the door fully, the hot steam from the oven may cause burns on the operator.

### Summary

In the light of the above, it is desired to provide alternate solutions for facilitating the manoeuvring of an oven door, especially for ovens in professional kitchens. These and other objects are achieved by providing a device and a method for assisted door opening of an oven door having the features in the independent claims. Preferred embodiments are defined in the dependent claims.

Hence, according to a first aspect of the present invention, there is provided an oven door opening arrangement for assisted opening of an oven door in relation to an oven body. The oven door is attached to the oven body by at least one hinge and turnable around an axis A between an closed position and an open position. The oven door opening arrangement comprises a sensor configured to detect a state of the oven door, said state being switchable between a locked state and an unlocked state, a control unit connected to the sensor and configured to control an operation of the oven door opening arrangement, and a door opening unit comprising a drive unit intended to be stationary arranged on the oven body, and an actuating unit intended to be stationary arranged on the oven door. The control unit is configured to, based on an input from the sensor, control the door opening unit to turn the oven door around said at least one hinge when the state detected by the sensor is the unlocked state.

The present embodiment thus provides the possibility to automatically or semi-automatically open a door of an oven. The door opening arrangement advantageously provides a way for an operator to open the oven door without the need to use both hands, which facilitates the work for an operator as well as enhances the security of the operation of the oven. The automatic and/or semi-automatic opening of the oven door further means that the risk of spilling from a tray or dropping the tray while trying to open the oven door may be minimized.

Instead, the operator may smoothly open the oven door while maintaining the tray in their hands, while the oven door is opened for them. Further, the oven door may be controlled to be automatically open such that steam inside the oven interior may be let out before the door reaches the open position, protecting the operator from the hot steam. Thereby, with this oven door opening arrangement, the risk of causing burns on the operator is mitigated.

According to a second aspect of the present invention, a method for assisted opening of an oven door is provided, the method being implemented in a control unit of a door opening arrangement according to the first aspect of the invention. The method comprises the steps of receiving an input from the sensor regarding a detected unlocked state of the oven door, corresponding to a semi-closed position of the oven door, controlling the door opening unit to turn the oven door from the semi-closed position to a first position, maintaining the oven door in the first position for a predetermined time T, and controlling the door opening unit to turn the oven door to the open position, allowing access to an oven interior.

To open the oven door, an operator may move the handle of the oven door to manually release the door lock, i.e. cause the door lock to switch from the locked state to the unlocked state, and cause the oven door to move from the closed position to the semi-closed position. The operator may further use a user interface to automatically release the door lock, i.e. cause the oven door to switch from the locked state to the unlocked state. The user interface may respond to a voice command from the operator, or comprise push buttons, a touch screen, etc. The control unit may be connected to a sensor detecting the state of the oven door, the state being locked or unlocked. The sensor may for example be a microswitch or a magnetic reed switch detecting a rotation of the oven door. Thus, the above examples allows the operator to initiate an automatic opening of the oven door, why the oven door may be opened automatically. This is advantageous since the operator may easily initiate the opening process by a standard movement already in their repertoire. Further, the operator does not have to put down any tray, or risk spilling from the tray when opening the door. Further, the assisted opening of the oven door ensures that the oven door stays in the first position for a predetermined time, in order to allow steam to escape the oven interior, thereby decreasing the risk of burning the operator.

By "operator" is herein meant a person using the oven, for example a person working in a kitchen, such as a baker, a chef, or any other person preparing food.

By "an oven interior" is herein meant a cooking chamber of an oven where a tray may be placed. The oven interior may be equipped with guide rails for a plurality of trays.

By "semi-automatic" is herein meant an automatic process that is started by a manual step, for example with a manual movement of a handle.

The problems with existing solutions for manually opening oven doors may be divided into three exemplifying cases, the first one being an operator holding a tray for placing in an oven interior with one hand. The operator may then use their free hand to open the oven door, and when the oven door is opened, put the tray into the oven interior. Meanwhile, the operator may need to hold the oven door open still with their free hand, or by leaning towards the door with some other body part, such as the hip or back. This is an unstable operation, which may lead to spilling of the goods placed on the tray, or even dropping the tray due to heavy weight, or burning themselves due to them needing to keep the oven door open while loading the tray inside the oven. The risk of accidents or damages may further increase due to the operator not being able to focus on one thing at a time. Furthermore, operators with disabilities may not be able to open the oven door at all while holding the tray.

The second case is when an operator holds a tray with both hands, and puts down the tray somewhere close to the oven in order to open the oven door. Then, while keeping the oven door open, the operator picks up the tray and loads it into the oven interior. To make this work in an efficient way, there must be some kind of unloading area reserved for a tray near the oven, where the operator may temporarily unload the tray in order to free their hands. Often in kitchens, there is not enough space for unloading areas, why the operator may have to place the tray on a temporary surface which may not be stable or suitable for the placement of a tray. This increases the risk of spilling and/or dropping the tray. Further, the temporary placement of the tray may cause the operator to get stressed and feel the need of hurrying up the process of opening the oven door, why they may swing up the oven door in one quick movement, causing the steam inside the oven door to escape the oven interior and hit the operator, causing burns.

Lastly, the third case is when an operator without experience opens the oven door in one quick movement, leading to a large amount of steam escaping the oven and burning the operator.

As mentioned, the present invention solves the above stated problems by providing a door opening arrangement and a method for assisted opening of an oven door. The oven may be any type of oven for cooking food, for example a freestanding, independent oven.

The oven door may be a conventional oven door, for example a left hinged or a right hinged door. The oven door may thus be opened like a regular door, and be turnable around a vertical axis on the lefthand or righthand side of the oven door. The oven door may have a rectangular shape. The oven door may turn outwards towards the operator, allowing access to the oven interior behind the oven door. In another example, the oven door may be equipped with hinges on a top or bottom side thereof instead, whereby the door is turned around a horizontal axis on a top or bottom side of the oven door, and turned outwards towards the operator. The hinges may be any hinges suitable for use in oven door installations.

The door may be turnable between an open position and a closed position, wherein the open position may correspond to the oven door having been turned outwards, unlocked and released from the oven body, such that the oven interior is accessible to the operator, and the closed position corresponding to the oven door being locked and engaged with the oven body, i.e. sealing the oven interior and thus restricting access to the operator. The oven door may be configurable in more positions, such as a first position, which may be a position between the opened position and the closed position, or between the opened position and the semi-closed position.

Further, the handle may be any type of handle suitable for being installed on an oven door. The handle may be actuated by an operator by turning, pushing or pulling the handle, either using their hands or any other parts of their body, for example an elbow or a shoulder.

Thus, the oven door opening arrangement may be modular, and suitable for installation on any oven having an oven body and an oven door attached to the oven body by at least one hinge and turnable around an axis between a closed position and an open position. This is advantageous in that the advantages with the open door arrangement may be achieved with any suitable oven door, and the arrangement may be applied on an already existing oven, avoiding the need to install a new oven for the purpose of achieving the effects of the present invention. Thus, the oven door opening arrangement may function as an accessory to ovens, which may be installed where there is need for it. This is further advantageous in that the oven door opening arrangement is flexible, modular and has many areas of use.

According to an exemplifying embodiment of the present disclosure, the actuating unit comprises a plate, arranged coaxially with the at least one hinge of the oven door along axis A, and intended to turn together with the at least one hinge. The drive unit comprises a rotating means configured to engage with the plate to turn the oven door. The plate may thus be stationary arranged on the oven door. By stationary arranged may herein mean that the oven door and the plate are arranged to move with each other, such that if the oven door turns, the plate turns with the oven door. Pu another way, the oven door and the plate are not movable relative to each other. Therefore, a turn of the oven door may cause a turn of the plate arranged stationary on the oven door, and vice versa, i.e. when the plate turns, it may acuate a turning movement of the oven door.

The actuating unit comprising the plate may be arranged on a top side of the oven door, or on a bottom side of the oven door. A top side may herein be meant somewhere along the side of the oven door facing the top of the oven body. Similarly, the bottom side of the oven door may herein be meant somewhere along the side of the oven door facing the ground or floor of the environment in which the oven is situated. Further, in the example where the oven door is rectangular, and the at least one hinge of the oven door is installed along a horizontal axis on a top side or a bottom side of the oven door, the actuating unit comprising the plate may be installed on the right-hand or left-hand side of the oven door, to be coaxially arranged with the at least one hinge.

Further, the coaxial arrangement between the plate and the at least one hinge of the oven door may be established via a pin, which is installed in the oven door on the same side of the oven door where the at least one hinge is situated. For example, if the oven door is a right-hinged oven door, the pin may be installed on the right-hand side of the oven door. The plate may have a rotationally symmetric shape.

According to an exemplifying embodiment of the present disclosure, the plate has a circular shape transverse to axis A. This is advantageous in that the axis A may coincide with the center of the circular plate. The pin may for example be installed in the center of the circular shape. Further, this may facilitate installation of the plate, since it will be easy to know how to place the plate on the oven door.

The pin may be arranged in the centre of the plate. Further, the pin may be inserted in a through-hole in the plate, and thus extend through the plate to the oven door. The pin may be inserted into a borehole in the oven door for receiving the pin. In this way, the pin may coaxially connect the plate and the axis on which the at least one hinge are arranged and turns around. The plate and the oven door are thus mechanically coupled by the pin. Further, the actuating unit comprising the plate are coaxially coupled along axis A to the at least one hinge on the oven door through the pin. The coaxial arrangement between the plate and the at least one hinge along axis A is advantageous in that the oven door opening arrangement may utilize already existing components of the oven to be installed. This enables the oven door opening arrangement to be a modular solution, which may be installed on already existing ovens already installed in their desired environment. Thus, an operator only needs to add on the oven door opening arrangement to achieve assisted door opening.

Further, the rotating means of the drive unit are arranged to engage with the plate to turn the oven door. The rotating means may protrude from the drive unit, which is stationary installed on the oven body. The rotating means may rotate around an axis B which may be transverse to axis A. The rotating means may engage with the plate by a mating configuration. For example, a part of the rotating means may be joined with a corresponding part of the plate. Thus, the plate may have a surface which may be structured in a way for mating with a corresponding structured surface of the rotating means. The mating configuration between the plate and the rotating means may for example be a male/female connection. The engagement between the rotating means and the plate may thus result in that a rotation of the rotating means actuates a movement of the plate. Since the plate may turn around axis A, an actuation of a movement of the plate by the rotating means may result in a turning movement of the plate around axis A. The plate is stationary arranged on the oven door, and coaxially arranged with the at least one hinge of the oven door, why a turning movement of the plate may be translated to a turning movement of the oven door, causing it to move from a closed position to an open position, or vice versa, or any intermediate position therebetween.

Further, the rotating means may be configured to rotate in two directions, clockwise and counter-clockwise around axis B. Depending on the direction of the rotation of the rotating means, the oven door may turn in two directions, an opening direction wherein the oven door turns from a closed position towards the open position, i.e. outwards from the oven interior, and a closing direction, wherein the oven door turns from an open position towards the closed position, i.e. towards the oven interior. This is advantageous in that the rotating means may be utilized for both opening and closing of the door. Further, the rotating means provide a reliable and smooth way of actuating a turning of the door, by transmitting a rotational movement around one axis to a rotational movement around another axis.

According to an exemplifying embodiment of the present disclosure, the plate is a gear wheel, and the rotating means is a gear shaft. Thus, the plate and rotating means may engage via cogs on the gear wheel and gear shaft, respectively. This is advantageous in that the size of the cogs on the plate and the rotating means may be chosen to correspond with a desired opening rate of the oven door. An increased size of the cogs, or an increased distance between the cogs of the gear wheel and/or gear shaft may lead to a faster opening rate of the oven door, but not very smooth. The opposite example, where the cog size is smaller, or the distance between the cogs is decreased, the oven door opening rate may be decreased, but with a smoother opening movement. Further, the use of a gear wheel and a gear shaft is advantageous since it is a known and reliable set of mechanical components that don't require specific installation in order to function. It may further be advantageous from the production perspective, since gear wheels and gear shafts are standard components which may be cheap and simple to produce. Even further, from an installation perspective, the opening arrangement may be easy to install, and the use of standard components may increase the reliability of the structure.

According to an exemplifying embodiment of the present disclosure, the drive unit further comprises a step motor configured to drive the rotating means. The step motor may be stationary arranged on the oven body. Further, the step motor may be controlled by the control unit. The step motor may drive the rotating means with different velocities. This is advantageous since it allows the oven door to be opened with different velocities. For example, the oven door may be opened with a first velocity, and closed with a second velocity, wherein the first velocity may be different from the second velocity. For example, it may be more important to close the oven door with an increased velocity compared to an opening velocity of the oven door. If an operator has inserted a tray with items to be cooked on it, the oven may be preheated, and when the oven door is open, heat may escape from the oven interior. Therefore, there may be a desire from the operator to leave the oven door open for a minimum time. Therefore, it may be desired to have the oven door closed with an increased velocity. Further, when an operator wishes to open the oven door, there may be a desire to open the oven door with a decreased velocity, for example if the operator stands in front of the oven door with a tray, it is undesirable to have the oven door swing open on the operator. Further, the control unit may control the step motor of the drive unit. Thus, the control unit may control the step motor to drive the rotating means with a constant velocity, or with a varying velocity. The control unit may be programmed before installation to drive the drive unit a certain way. Further, the control unit may be programmed by an operator while using the oven to set the opening/closing velocity of the door. Even further, the control unit may be programmed to adjust the velocity of the step motor depending on a pre-set cooking program of the oven.

According to an exemplifying embodiment of the present disclosure, the oven door opening arrangement further comprises a support plate assembly including a first part and a second part, wherein the first part is intended to be stationary arranged on the oven body, and configured to support the drive unit, and the second part is intended to be stationary arranged on the oven door, configured to support the actuating unit. The support plate assembly may thus support the oven door opening arrangement such that the oven door opening arrangement may be reliably installed on the oven body and the oven door. The support plate assembly facilitates installation of the oven door opening arrangement, and connects the components of the oven door opening arrangement to form one modular unit to be installed on already existing ovens. The support plate assembly may be provided with bolts, screws, or similar, to enable attachment of the support plate assembly on the oven body and the oven door, respectively. Further, the first part of the support plate assembly and the second part of the support plate assembly may both be rigidly installed on the oven door and the oven body, respectively. By rigidly is herein meant that the first part and the second part of the support plate assembly are prevented from turning together with the plate of the actuating unit and the oven door. Further, the first part and the second part of the support plate assembly may be attached to each other. The second part of the support plate assembly may thus comprise a through-hole to allow installation of the pin through the second part of the support plate assembly, such that the pin may provide the coupling between the actuating unit and the at least one hinge along axis A of the oven door. The support plate assembly thus provides an increased stability of the oven door opening arrangement and enables modularity.

According to an exemplifying embodiment of the present disclosure, the oven door opening arrangement may comprise a housing arranged to cover the actuating unit and the drive unit. The housing may for example be made from plastic, which is lightweight and easy to manufacture in custom shapes. The housing may have a shape corresponding to the shape of the door opening unit with the actuating unit and the drive unit. This is advantageous in order to protect the oven door opening arrangement, and especially the drive unit comprising the plate, and the actuating unit comprising the rotating means. By installing a housing, the oven door opening arrangement may be protected from being soiled and/or interfered with, and therefore the risk of malfunction is decreased.

According to an exemplifying embodiment of the present disclosure, the oven door is further turnable between a semi-closed position and a first position. The semi-closed position and the first position may be positions arranged between the open position and the closed position. During opening of the oven door, the oven door may move from the closed position to the semi-closed position, and from the semi-closed position to the first position, and then from the first position to the open position. When closing the oven door, the oven door may move from the open position to the semi-closed position, and from the semi-closed position to the closed position, without stopping at the first position. The first position may thus be a position where steam is allowed to escape from the oven body, which may not be needed during the closing of the oven door. The present embodiment is advantageous since it allows the oven door to be configurable between a range of positions.

According to an exemplifying embodiment of the present disclosure, the locked state of the oven door corresponds to the closed position wherein the oven door is engaged to the oven body via a door lock, and the unlocked state corresponds to the semi-closed position wherein the oven door is released from the oven body via the door lock. Thus, the oven door may further comprise a door lock, which locks the oven door to the oven body. The door lock may for example be a type of hook or hatch, an electrical lock, or magnets, or a combination of all or some of the previously mentioned. When the door lock switches from the locked state to the unlocked state, the door lock may release the oven door from the oven body by breaking an electrical circuit which may release the oven door from the oven body, and this position may correspond to the semi-closed position of the oven door. The oven door may be released and turned around the axis A with one or a few degrees, for example as a result of an elastic gasket arranged around the periphery of the oven door, expanding upon the door lock switching states from the locked state to the unlocked state. Similarly, the elastic gasket may be compressed when the door lock switches from the unlocked state to the locked state. In another example, the door opening arrangement may maintain the oven door in the semi-closed position upon releasing the oven door from the oven body as a result of the door lock switching from a locked to the unlocked state. Thus, the oven door may be turned around axis A with one or a few degrees upon being released, and thereafter be maintained in this semi-closed position by the door opening arrangement keeping the oven door engaged to the oven body with a distance therebetween, the distance corresponding to one or a few degrees of rotation around axis A.

Turning now to the second aspect of the present invention, relating to the method for assisted opening of an oven door, the method being implemented in a control unit of the door opening arrangement according to the first aspect of the present invention. As previously discussed, the control unit receives an input from the sensor regarding a detected state of the oven door, the state being unlocked or locked. The sensor may be any sensor suitable for detecting an unlocking or locking of an oven door, for example a motion detection sensor, a positioning sensor, or a magnetic reed.

According to an exemplifying embodiment of the present disclosure, the locked state of the oven door corresponds to the closed position wherein the oven door is engaged to the oven body via a door lock, and the unlocked state corresponds to the semi-closed position of the oven door wherein the oven door is released from the oven body via the door lock. Thus, the control unit may be configured to control a door lock in the oven door to change from a locked state to an unlocked state. The door lock maintains the oven door engaged to the oven body in the locked state, corresponding to the closed position of the oven door, and releases the oven door from the oven body in the unlocked state corresponding to the semi-closed position of the oven door. The door lock may for example be a hatch, or an electrical door lock.

The operator may for example turn or rotate the handle in order to manually release the door lock and switch the state of the oven door from a locked state to an unlocked state, and thereby initiate the opening movement. Further, the operator may use a user interface to automatically release the door lock and switch the state of the oven door from a locked state to an unlocked state, and initiate an opening movement of the oven door. The operator may for example use voice command or a push button on the user interface. In this example, the control unit may be configured to receive the information from the user interface regarding the voice command. The control unit then controls the door opening unit to turn the oven door from the closed position to a first position. The oven door is thus turned around the at least one hinge arranged along axis A via the drive unit and the actuating unit. Put in other words, the control unit may control the step motor of the drive unit to drive the rotating means in order to turn the plate of the actuating unit, thereby turning the oven door.

The first position of the oven door may be a position wherein the door is ajar and not in an open position. Thus, the operator may still be prevented from accessing the oven interior in the first position. The control unit then maintains the door in the first position for a predetermined time T. The control unit may thus control the drive unit to stop at a given position and then wait for the predetermined time T before starting the drive unit again. This is advantageous since it allows steam inside the oven interior to escape the oven interior through the oven door while minimizing the risk of exposing the operator with hot steam. The predetermined time T may be manually set by an operator. Further, the predetermined time T may be set by the control unit. The control unit may set the predetermined time T with a fixed value that will remain the same regardless of the oven type or the temperature inside the oven interior, or a specific cooking program. Further, the control unit may set the predetermined time T based on further inputs which the control unit may receive. If the previous is the case, the control unit may determine the predetermined time T after the opening movement of the handle is detected.

According to an exemplifying embodiment of the present disclosure, the control unit is further configured to receive an input from a humidity comprising information about a humidity level of an oven interior, and wherein the predetermined time T is determined based on said information. The control unit may thus determine the predetermined time T based on a humidity level inside the oven interior. For example, the predetermined time T may be increased the higher the measured humidity is, and decreased the lower the measured humidity is. The control unit may receive the input when an unlocked state is detected by the sensor, and thereafter determine the predetermined time T. The control unit may for example receive inputs from the humidity sensor continuously, and use the latest value received before the opening movement was detected in order to determine the predetermine time T. The control unit may further trigger the humidity sensor to send a signal with a measured humidity value upon receiving the detection of the state of the oven door being the unlocked state. The humidity sensor may be a sensor arranged inside the oven interior, or a humidity estimator, predicting the humidity inside the oven interior. Thus, the humidity sensor may not be a physical sensor per se, but may instead be an estimator implemented in the control unit for calculating or predicting a humidity level inside the oven depending on a temperature inside the oven, for example. This embodiment advantageous in that the oven door opening arrangement may be customized for different humidity levels inside the oven interior. Thus, if there is an increased amount of steam inside the oven interior, the control unit may control the drive unit to maintain the rotating means in its current position for a longer period of time, to ensure that all steam exits the oven interior before the operator is given access to the oven interior. This is further advantageous the other way around, i.e. if a lower humidity level is detected, the oven door may be opened faster, allowing the operator to more quickly reach the oven interior. Thus, the operational safety of the oven may be improved.

According to an exemplifying embodiment of the present disclosure, the control unit is further configured to receive an input from a temperature sensor arranged to detect the temperature within the oven interior, and wherein the predetermined time T is determined based on said information. The temperature sensor may be any sensor suitable for determining the temperature inside an oven interior. The control unit may thus determine the predetermined time T based on a temperature level inside the oven interior. For example, the predetermined time T may be increased the higher the measured temperature is, and decreased the lower the measured temperature is. The control unit may receive the input when the unlocked state of the oven door is detected by the sensor, and thereafter determine the predetermined time T. The control unit may for example receive inputs from the temperature sensor continuously, and use the latest value received before the opening movement was detected in order to determine the predetermine time T. The control unit may further trigger the temperature sensor to send a signal with a measured temperature value upon receiving the detection of the unlocked state of the oven door by the sensor. This embodiment advantageous in that the oven door opening arrangement may be customized for different temperature levels inside the oven interior. Thus, if there is an increased temperature inside the oven interior, the control unit may control the drive unit to maintain the rotating means in its current position for a longer period of time, to ensure that the operator does not have access to the oven interior until the temperature immediately outside the oven interior has sunken so that it is safe to do so. This is further advantageous the other way around, i.e. if a lower temperature level is detected, the oven door may be opened faster, allowing the operator to more quickly reach the oven interior. Thus, the operational safety of the oven may be improved.

The control unit may further receive an input from both the humidity sensor and the temperature sensor, and may determine the predetermined time T based on a balance of both inputs. The control unit may further be configured to receive an input from a user interface regarding a specific cooking program, and wherein the predetermined time T is determined based on said input. The oven may for example be provided with a user interface in which the operator may choose from a range of settings, or different cooking programs. The cooking programs may include parameters such as at least one humidity level, at least one temperature level, a length of the cooking program, etc. The control unit may then be connected to the user interface in order to be able to receive the information about the chosen cooking program. The control unit may then, based on the information from the user interface, determine the predetermined time T. This is advantageous since it allows a further customization of the oven door opening arrangement.

When the predetermined time T has lapsed, the control unit controls the door opening unit to turn the oven door to the open position, allowing access to the oven interior. The operator may then perform their desired tasks, for example loading or unloading a tray from the oven interior, etc. The oven door may be locked in the open position until the operator desires to close the oven door. The oven door may be locked in the open position by the control unit controlling the drive unit to stop, thereby locking the rotating means and the plate together at a certain position. In the example where the rotating means is a gear shaft and the plate is a gear wheel, the oven door may be locked in position by the gears of the shaft and the gear wheel being engaged, preventing them to move relative to each other unless the drive unit is started again. For example, in the example where the drive unit comprises a step motor, the step motor may be stopped in a position by adding a resistance preventing it from returning to its initial position. This is advantageous since it prevents the door from being closed while the operator stands in front of the oven interior and performing tasks, thereby minimizing the risk of burns and the operator coming into contact with the hot areas of the oven.

According to an exemplifying embodiment of the present disclosure, the position of the oven door corresponds to a rotation of the oven door with an angle β. The rotation of the oven door with an angle β may be measured as the rotation of the oven door around axis A.

Further, according to an exemplifying embodiment of the present disclosure, the angle β is equal to 0 degrees when the oven door is locked in the closed position, and wherein the angle β is in a range between 90 and 180 degrees when the oven door is in the open position. Thus, the position of the oven door in the closed position may correspond to an angle β equal to 0. The angle β increases when the door is opened by a turning movement around axis A outwards from the oven interior. Thus, when the door is in the open position, the angle β is in a range between 90 and 180 degrees. The angle β may vary depending on the boundaries of the oven where the oven door opening arrangement is installed, or depending on settings set in the control unit upon installation. For example, the door may be installed with one side against a wall, why the door may be restricted from being opened 180 degrees in order to prevent it from hitting the wall. If the oven is standing free without any obstacles nearby, the door may be opened 180 degrees.

According to an exemplifying embodiment of the present disclosure, the angle β is in a range between 1 and 10 degrees when the oven door is in the first position. Thus, the angle β may be large enough for the oven door to be opened, but small enough to prevent the operator to access the oven interior. For example, the angle β may be 5 degrees in the first position. This range allows the steam to escape the oven interior along the sides of the oven door, while the surface of the oven door may protect the operator standing in front of the oven door. For example, if the oven door was directly opened to 90 degrees without stopping at the first position, the surface of the door would not cover most of the oven interior why an operator standing in front of the oven door may be exposed with steam.

Further, the control unit may be configured to open the door to further positions than the closed position, the first position and the open position. For example, there may be a second position where the oven door is opened within the range of 0 to 180 degrees, for example 45 degrees.

According to an exemplifying embodiment of the present disclosure, the method further comprises two additional steps, to be performed subsequent to the step of controlling the door opening unit to turn the oven door to the open position, allowing access to an oven interior. The subsequent steps comprises receiving, from a user interface, a user input comprising an instruction to turn the oven door from the open position to the closed position, and controlling the door opening unit to turn the oven door from the open position to the closed position. Thus, the oven door opening arrangement may also provide assisted closing of the oven door. The door may be closed by the oven door opening arrangement by the control unit controlling the drive unit to drive the rotating means to rotate in the direction opposite to the direction where the oven door is opened. The rotating means may then force the plate of the actuating unit to rotate the opposite direction, thereby causing the oven door to turn around axis A the opposite direction, and the oven door may thus be closed. The control unit may control the drive unit to close the oven door from the opened position to the closed position without stopping at the first position. The control unit may be connected to the user interface, where an operator may choose a setting saying that the oven door should be closed automatically. The control unit may then control the drive unit to, after reaching the open position of the oven door, to wait a predetermined time T2, and then control the drive unit to close the door. The predetermined time T2 may be automatically chosen by the control unit, or manually set in the user interface by the operator. In another example, the control unit may control the drive unit to close the door upon detecting a closing movement of the oven door. In the example where the oven door is stopped in the open position, the operator may for example perform a closing movement of the oven door in the (stopped) open position, by performing a closing movement of the handle. The control unit may be configured to detect the closing movement of the handle, and thereby controlling the drive unit to close the oven door.

In another example, the control unit may also allow the operator to manually close the door. In the example where the oven door is stopped in the open position, the operator may for example perform a closing movement of the oven door in the (stopped) open position, by performing a closing movement of the handle. The control unit may then release the resistance of the step motor in the drive unit to allow the operator to manually close the door.

### Brief description of the drawings

Exemplifying embodiments will now be described more in detail, with reference to the following appended drawings, in which:
Figure 1 illustrates a perspective view of an oven with an oven door opening arrangement and a detailed view of the oven door opening arrangement according to an exemplifying embodiment of the present disclosure;
Figure 2 illustrates a perspective view of an oven door opening arrangement according to an embodiment of the present disclosure;
Figure 3 illustrates a side view of a door opening unit installed in an oven body and an oven door according to an embodiment of the present disclosure;
Figures 4a-4d illustrates perspective views of an oven with an oven door opening arrangement with the oven door in different positions according to embodiments of the present disclosure;
Figure 5 illustrates a method for assisted opening of an oven door implemented in a control unit of a door opening arrangement, according to an embodiment of the present disclosure.

### Detailed description

As illustrated in the figures, the size of the elements and regions may be exaggerated for illustrative purposes and, thus, are provided to illustrate the general structures of the embodiments. Like reference numerals refer to like elements throughout.

Exemplifying embodiments will now be described more fully hereinafter with reference to the accompanying figures, in which currently preferred embodiments are shown. The invention may, however, be embodied in many different forms and should not be construed as limited to the embodiments set forth herein; rather, these embodiments are provided for thoroughness and completeness, and fully convey the scope of the invention to the skilled person.

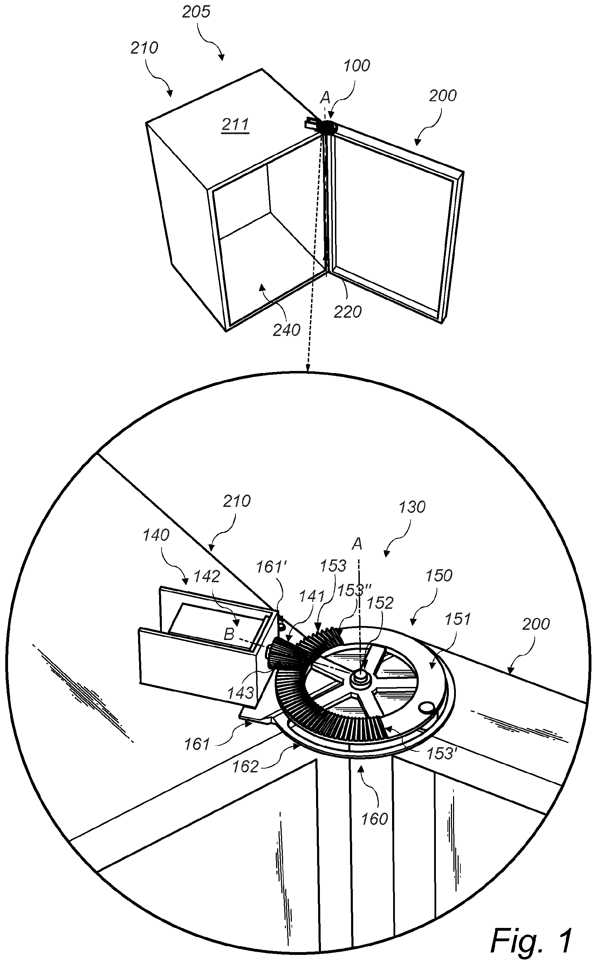

With reference to Fig. 1, a perspective view of an oven 205 with an oven door opening arrangement 100 and a detailed view of the oven door opening arrangement 100 according to an exemplifying embodiment of the present disclosure is shown. The oven 205 comprises an oven body 210 and an oven door 200. The oven 205 in the present figure is substantially rectangular with a top surface 211. The oven door 200 is pivotably connected to the oven body 210 via at least one hinge 220. The oven body 210 is partly hollow and comprises an oven interior 240. The oven 205 may be any type of oven 205, for example an oven 205 for cooking food. Thus, the oven interior 240 may for example be used as a cooking chamber, where trays (not shown) may be inserted. The oven door 200 may be entirely see-through, for example made of glass, or not see-through, and made from a material with opaque characteristics, for example a metal. The oven door 200 may further include a window which is see-through. However the characteristics of the oven 205 itself are outside the scope of this invention. On the top surface 211 of the oven body 210, an oven door opening arrangement 100 is arranged. The oven door opening arrangement 100 is arranged on the side of the top surface 211 which coincides with the side where the oven door 200 is attached via at least one hinge 220 to the oven body 210. The at least one hinge 220, which in the present figure are two hinges 220, are arranged partly on the oven body 210, and partly on the oven door 200. The two hinges 220 are arranged along an axis A. The oven door opening arrangement 100 is also partly arranged on the oven body 210, and partly arranged on the oven door 200, and some parts of the oven door opening arrangement 100 are aligned with axis A, which will be explained more in detail with reference to the succeeding figures.

Looking now at the detailed view of Fig. 1, a door opening unit 130 of an oven door opening arrangement 100 is shown. The door opening unit 130 comprises an actuating unit 140 stationary arranged on the oven body 210. The stationary arrangement is established via the support plate assembly 160. The support plate assembly 160 has a first part 161 and a second part 162. The first part 161 is attached to the oven body 210 with screws or bolts 161'. The second part 162 of the support plate assembly 160 is attached to the oven door 200 via a pin 152. The pin 152 may be installed through a through-hole (not shown) in the second part 162 of the support plate 160. The pin 152 may therefore hold the second part 162 in place. Further, the first part 161 and the second part 162 are attached to each other to form one support assembly 160. The support plate assembly 160 supports a plate 151 of the drive unit 150. The plate 151 in the present figure is a gear wheel. The gear wheel 151 is a circular disc, wherein multiple teeth are 153 arranged around the periphery of the gear wheel 151 on a top surface thereof. The teeth 153 of the gear wheel 151 cover approximately 50%, or 180 degrees around the circumference of the gear wheel 151. The oven door 200 may only be opened 180 degrees from a closed position, which may further be ensured by the teeth 153 of the gear wheel 151, which will prevent this. The gear wheel 151 is arranged around axis A, around which it rotates. Thus, the centre of the gear wheel 151 is aligned with axis A, and thus also the at least one hinge 220. The pin 152 is arranged in the centre of the gear wheel 151 and thus also arranged along axis A. The gear wheel 151 is driven by the actuating unit 140. The actuating unit 140 comprises a step motor 142, and a rotating means 142. The rotating means 142 is a gear shaft. The step motor 141 drives the gear shaft 142 such that it rotates. The gear shaft 142 rotates around an axis B, which is perpendicular to axis A. The gear shaft 142 has the shape of a truncated cone and comprises a plurality of teeth 143 arranged around the periphery of the gear shaft 142. The teeth 143 of the gear shaft 142 engages with the teeth 153 of the gear wheel 151. Thus, the teeth 143 of the gear shaft 142 and the teeth 153 of the gear wheel 151 have a corresponding shape such that they mate with each other. The gear wheel 151 and the gear shaft 142 together form a bevel gear. Further, the position of the teeth 153 of the gear plate 151 shown in fig. 1 shows the oven door 200 in a partly opened position. The respective end points 153', 153" of the teeth 153 around the periphery of the gear wheel 151 each correspond to a closed position of the oven door 200, and the fully opened position (i.e. 180 degrees opened) of the oven door 200.

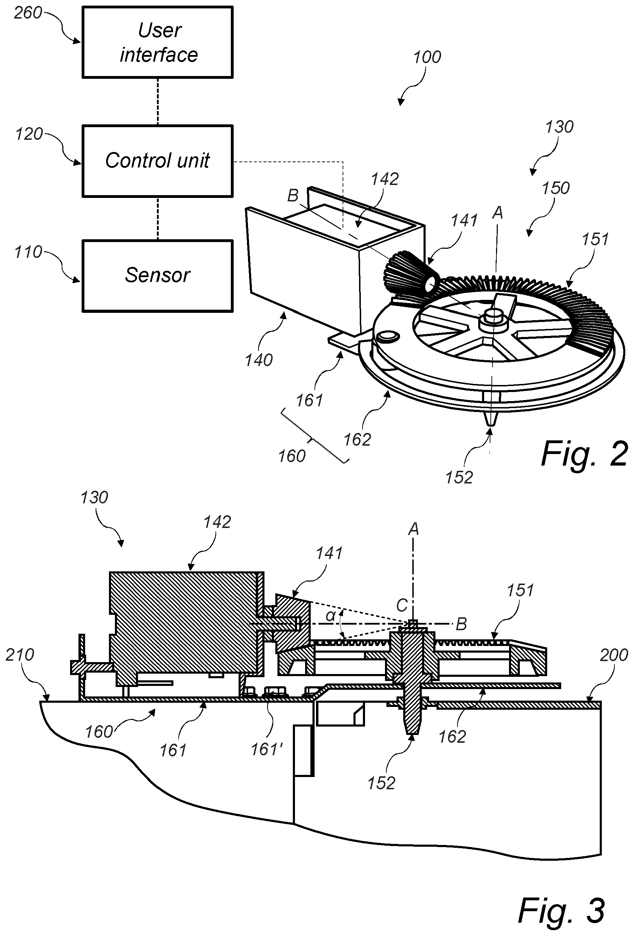

With reference to Fig. 2, a perspective view of an oven door opening arrangement 100 according to an embodiment of the present disclosure is shown. The oven door opening arrangement 100 comprises, in addition to the door opening unit 130, a sensor 110 and a control unit 120. The control unit 120 is connected to the actuating unit 140 of the door opening unit 130. The control unit 120 may thus control the step motor 142 of the actuating unit 140 to drive the rotating means 141 to rotate around axis B. The control unit 120 is further connected to the sensor 110. The sensor 110 senses an opening movement of a door handle (not shown) on the oven door (not shown). The control unit 120 is thus configured to receive inputs from the sensor 110, and thereafter either start the step motor 142 to start opening the oven door (not shown). The control unit 120 may control the step motor 142 to rotate the rotating means 141 in both a clockwise and a counter-clockwise direction around axis B. This means that the plate 151 can be rotated in a clockwise and a counter-clockwise direction around axis A, which ultimately has the effect that the oven door (not shown) is able to be turned in both an opening direction, and an opposite, closing direction around A. The control unit 120 may further control the step motor 142 to drive with different velocities. Further, the control unit 120 is connected to a user interface 260. The user interface 260 may be part of the oven (not shown) prior to the oven door opening arrangement 100 being installed. The control unit 120 may thus be connected to the user interface 260 as a step in the installation of the oven door opening arrangement 100. The control unit 260 may receive inputs from a user via the user interface 260, the input for example comprising information regarding a cooking program, a temperature and humidity level of the oven interior (not shown), an instruction to automatically close and/or open the oven door (not shown). The control unit 120 may thus control the actuating unit 140 with the step motor 142 and the rotating means 141 to start, stop, change direction or change a speed of the step motor 141, for example. Further, the pin 152 extends from the plate 151, through the second part 162 of the support plate assembly 160 and towards the oven door (not shown).

With reference to Fig. 3, a side view of a door opening unit 130 installed in an oven body 210 and an oven door 200 according to an embodiment of the present disclosure is shown. The step motor 142 protrudes along axis B into the rotating means 141, forming a connection therebetween. Further, axis A and axis B are transverse, and intersect at the top of the pin 152. The rotating means 141 has the shape of a truncated cone with a center axis coinciding with axis B. Further, the angle α of the inclined "legs" of the conical shape is chosen such that the imaginary vertex C of the rotating means 141 coincide with the intersection between axis A and axis B. Further, the profile of the periphery of the plate 151 where the rotating means 141 engages with the plate 151 is inclined, and has the same angle as the "legs" of the conical shape of the rotating means 141. Therefore, the rotating means 141 and the plate 151 function as a bevel gear. A rotation of the rotating means 141 around axis B is translated into a rotation of the plate 151 around axis A. The plate 151 is attached to the oven door 200 via the pin 152. The pin 152 extends through the plate 151, through the second part 162 of the support plate assembly 160 and into the oven door where it is firmly secured. The attachment established by the pin 152 and the plate 151 is rigid, thus the pin 152 rotates together with the plate 151. However the pin 152 is not attached to the second part 162 of the support plate assembly 160 by a rigid attachment, therefore the plate 151 and the pin 152 rotates relative to the second part 162 of the support plate assembly 160. The rigid attachment between the plate 151, the pin 152 and the oven door 200 causes the oven door 200 to rotate around axis A together with the plate 151. Thus, the rotation of the plate 151 around axis A causes the at least one hinge 220 to rotate around axis A as a result of the rigid attachment between the drive unit 150 and the oven door 200 along axis A.

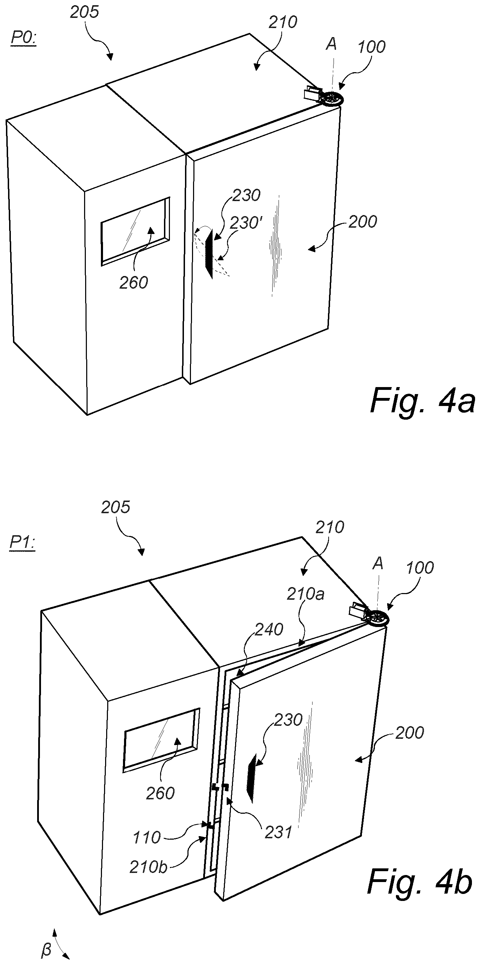

With reference to Fig. 4a, a perspective view of an oven 205 with an oven door opening arrangement 100 where the oven door 200 is in the closed position P0 according to an embodiment of the present disclosure is shown. The oven 205 comprises, apart from the oven body 210 and the oven door 200, a user interface 260 module, and a handle 230 arranged on the oven door 200. When the oven door 200 is in the closed position P0, the operator cannot access the oven interior (not shown). To start the oven door opening arrangement 100, the operator moves the handle 230, for example in a direction as seen in the present figure, where the handle 230 is rotated to an opening position 230'. The sensor (not shown) detects a state of the oven door, wherein the state may be a locked state, and an unlocked state. The sensor sends an input containing information about the detected state to the control unit (not shown) which actuates the actuating unit 140 to start a rotation of the rotating means 141. Alternatively, the operator may instruct the user interface 260 to open the oven door 200, for example by pressing a button (not shown) or via voice command. The user interface 260 detects the user input and sends an input to the control unit (not shown) which first unlocks the oven door, for example by a motorized device (not shown) and then actuates the actuating unit 140 to start a rotation of the rotating means 141. The oven door 200 is then turned around axis A and thereby automatically opened. The oven door 200 may be opened to a first position P1 which will now be described in relation to Fig. 4b.

With reference to Fig. 4b, a perspective view of an oven 205 with an oven door opening arrangement 100 where the oven door 200 is in the first position P1 according to an embodiment of the present disclosure is shown. In the present embodiment, the oven door 200 is opened by a rotation around axis A with an angle β. The oven door 200 may be fixed in this position, i.e. the control unit 120 controls the actuating unit 140 to stop the rotation of the rotating means 141 after the oven door 200 has been rotated the angle β. The angle β is preferably between 1 to 10 degrees. Thus, in this first position P1, the operator cannot access the oven interior 240. In the first position P1, hot steam coming from the oven interior 240 may escape the oven interior 240 without risking to expose the operator to hot steam. The hot steam (not shown) may escape the oven interior 240 along the sides 210a and 210b of the oven body 210. The sensor 110 detecting the state of the oven door 200, i.e. if the oven door 210 is in a locked state or an unlocked state, is arranged along the side 210b of the oven body. There is further a door lock 231 arranged on the oven 205, partly on the oven door 200 and partly on the oven body 210. The door lock 231 may be connected to the control unit (not shown) and, upon controlling the actuating unit 140 to open the oven door 200, the control unit (120) may control the door lock 231 to unlock and release the oven door 200 beforehand. The door lock 231 forms part of the oven 205 and not the oven door opening arrangement 100. The control unit (not shown) further controls the actuating unit 140 to maintain the oven door 200 in the first position P1 for a predetermined time T in order to allow a sufficient amount of hot steam to escape the oven interior 240. After the predetermined time T has passed, the control unit 120 controls the actuating unit 140 to continue the opening of the oven door 200 to an open position P2.

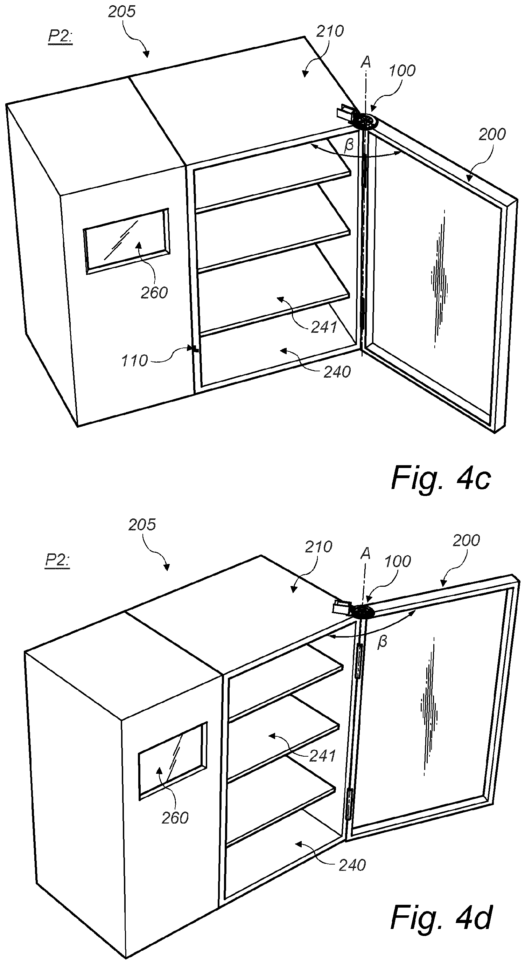

With reference to Fig. 4c, a perspective view of an oven 205 with an oven door opening arrangement 100 where the oven door 200 is in the open position P2 according to an embodiment of the present disclosure is shown. In the present embodiment, the oven door 200 is opened by a rotation around axis A with an angle β, where the angle β is approximately 90 degrees. The oven door 200 may be fixed in this position, i.e. the control unit 120 controls the actuating unit 140 to stop the rotation of the rotating means 141 after the oven door 200 has been rotated the angle β. Thus, in this open position P2, the operator can access the oven interior 240 to perform the necessary tasks, e.g. removing or inserting a tray (not shown) from the oven interior 240. In the open position P2, the hot steam has escaped the oven interior 240. The oven interior 240 may have shelves 241 on which the trays (not shown) may be placed. It will be advantageous to maintain the oven door 200 fixed in the open position P2 during the period where the operator performs tasks in the oven 205, since the risk of the oven door 200 starting to close and coming into contact with the operator or jamming the operator between the oven body 210 and the oven door 200 is mitigated.

Fig. 4d shows an alternative open position P2, where the oven door 200 is opened around axis A the angle β, wherein the angle β is approximately 180 degrees. This may be the maximum amount the oven door 200 can be opened. When the operator wishes to close the oven door 200, the control unit (not shown) of the oven door opening arrangement 100 may be configurable in at least three different ways. The first alternative to closing the oven door 200 is by the operator closing the oven door 200 manually. The control unit (not shown) of the oven door opening arrangement 100 is then configured to detect a closing movement of the oven door 200, and upon this detection, control the actuating unit 140 to release the oven door 200, for example by turning off the step motor 142 such that it releases the resistance of the rotating means 141 and the plate 151 such that they may be manually rotated by the operator closing the oven door 200. The second alternative to closing the oven door 200 is by a semi-automatic closing of the oven door 200. The control unit (not shown) is then configured to detect a closing movement of the oven door 200, and upon this detection, control the actuating unit 140 to automatically close the oven door 200, for example by controlling the step motor 142 to invert the direction of the rotating means 141 causing it to rotate in the opposite direction around axis B. The oven door 200 then automatically closes without more interference needed from the operator. The third alternative to closing the oven door 200 is to close the oven door 200 automatically, for example by waiting a predetermined time T2 after the oven door 200 ends up in the open position P2, or by the operator indicating via the user interface 260 that they wish to close the oven door 200. The control unit (not shown) then controls the actuating unit 140 to reverse the rotational direction of the rotating means 141 causing the oven door 200 to turn around axis A in the opposite direction, thereby closing the oven door 200. The operator may choose between the alternatives upon installation of the oven door opening arrangement 100.

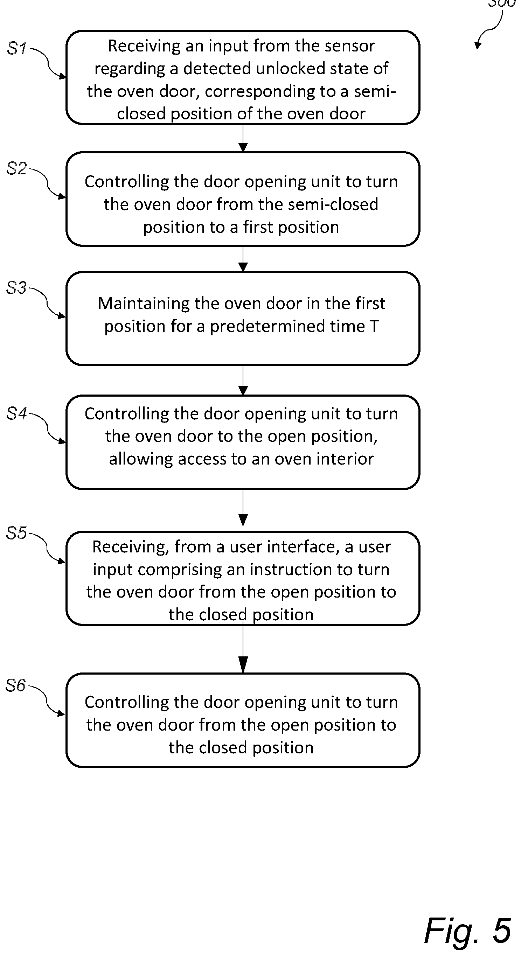

With reference to Fig. 5, a method 300 for assisted opening of an oven door 200 implemented in a control unit 120 of a door opening arrangement 100, according to an embodiment of the present disclosure is shown. The method 300 comprises a first step S1, receiving an input from the sensor (110) regarding a detected unlocked state of the oven door (200), corresponding to a semi-closed position (P00) of the oven door (200). Further, the method 300 comprises a step S2, wherein the control unit 120 controls the door opening unit 130 to turn the oven door 200 from the semi-closed position P00 to a first position P1. The method 300 further comprises the step S3, wherein the control unit 120 maintains the oven door 200 in the first position P1 for a predetermined time T. Step S4 is then performed, comprising the control unit 120 controlling the door opening unit 130 to turn the oven door 200 to the open position P2, allowing access to an oven interior 240. Thereafter, in step S5, the control unit 120 receives, from a user interface 260, a user input comprising an instruction to turn the oven door 200 from the open position P2 to the closed position P0. Lastly, the method 300 comprises the step S6, wherein the control unit 120 controls the opening unit 130 to turn the oven door 200 from the open position P2 to the closed position P0.

Although features and elements are described above in particular combinations, each feature or element can be used alone without the other features and elements or in various combinations with or without other features and elements.

Additionally, variations to the disclosed embodiments can be understood and effected by the skilled person in practicing the claimed invention, from a study of the figures, the disclosure, and the appended claims. In the claims, the word "comprising" does not exclude other elements, and the indefinite article "a" or "an" does not exclude a plurality. The mere fact that certain features are recited in mutually different dependent claims does not indicate that a combination of these features cannot be used to advantage.

## Claims

1. An oven door opening arrangement (100) for assisted opening of an oven door (200) in relation to an oven body (210), said oven door (200) is attached to the oven body (210) by at least one hinge (220) and turnable around an axis A between a closed position (P0) and an open position (P2), said oven door opening arrangement (100) comprising:
a sensor (110) configured to detect a state of the oven door (200), said state being switchable between a locked state and an unlocked state;
a control unit (120) connected to the sensor (110) and configured to control an operation of the oven door opening arrangement (100);
a door opening unit (130) comprising:
a drive unit (140) intended to be stationary arranged on the oven body (210); and
an actuating unit (150) intended to be stationary arranged on
the oven door (200);
wherein the control unit (120) is configured to, based on an input from the sensor (110), control the door opening unit (130) to turn the oven door (200) around said at least one hinge (220) when the state detected by the sensor (110) is the unlocked state.

2. Oven door opening arrangement (100) according to claim 1, wherein the actuating unit (150) comprises a plate (151), arranged coaxially with the at least one hinge (220) of the oven door (200) along axis A, and intended to turn together with the at least one hinge (220); and wherein
the drive unit (140) comprises a rotating means (141) configured to engage with the plate (151) to turn the oven door (200).

3. Oven door opening arrangement (100) according to claim 2, wherein the plate (151) has a circular shape and is arranged transverse to axis A.

4. Oven door opening arrangement (100) according to claim 2 or 3, wherein the plate (151) is a gear wheel, and the rotating means (141) is a gear shaft.

5. Oven door opening arrangement (100) according to any preceding claim, further comprising a support plate assembly (160) including a first part (161) and a second part (162), wherein the first part (161) is intended to be stationary arranged on the oven body (210), and configured to support the drive unit (140), and the second part (162) is intended to be stationary arranged on the oven door (200), configured to support the actuating unit (150).

6. Oven door opening arrangement (100) according to any one of claims 2 to 5, wherein the drive unit (140) further comprises a step motor (142) configured to drive the rotating means (141).

7. Oven door opening arrangement (100) according to any one of the preceding claims, wherein the oven door (200) is further turnable between a semi-closed position (P00), and a first position (P1), and wherein the locked state of the oven door (200) corresponds to the closed position (P0) wherein the oven door (200) is engaged to the oven body (210) via a door lock, and the unlocked state corresponds to the semi-closed position (P00) wherein the oven door (200) is released from the oven body (210) via the door lock.

8. A method (300) for assisted opening of an oven door (200), the method (300) implemented in a control unit (120) of a door opening arrangement (100) according to claim 1, said method (300) comprising the steps of:
a. receiving (S1) an input from the sensor (110) regarding a detected unlocked state of the oven door (200), corresponding to a semi-closed position (P00) of the oven door (200);
b. controlling (S2) the door opening unit (130) to turn the oven door (200) from the semi-closed position (P00) to a first position (P1);
c. maintaining (S3) the oven door (200) in the first position (P1) for a predetermined time T;
d. controlling (S4) the door opening unit (130) to turn the oven door (200) to the open position (P2), allowing access to an oven interior (240).

9. The method (300) according to claim 9, wherein the control unit (120) is further configured to receive an input from a humidity sensor comprising information about a humidity level of an oven interior (240), and wherein the predetermined time T is determined based on said information.

10. The method (300) according to claim 9 or 10, wherein the control unit (120) is further configured to receive an input from a temperature sensor arranged to detect the temperature within the oven interior (240), and wherein the predetermined time T is determined based on said information.

11. The method (300) according to any one of claims 9 to 11, wherein the locked state of the oven door (200) corresponds to the closed position (P0) wherein the oven door (200) is engaged to the oven body (210) via a door lock, and the unlocked state corresponds to the semi-closed position (P00) of the oven door (200) wherein the oven door (200) is released from the oven body (210) via the door lock.

12. The method (300) according to any of claims 9 to 12, wherein the position of the oven door (200) corresponds to a rotation of the oven door (200) with an angle β.

13. The method (300) according to claim 13, wherein the angle β is equal to 0 degrees when the oven door (200) is in the closed position (P0), and wherein the angle β is in a range between 90 and 180 degrees when the oven door (200) is in the open position (P2).

14. The method (300) according to claim 12 or 13, wherein the angle β is in a range between 1 and 10 degrees when the oven door (200) is in the first position (P1).

15. The method (300) according to any one of claims 7 to 12, further comprising a steps d1 and a step d2, to be performed subsequent to step d, said steps d1 and d2 comprising:
d1. receiving (S5), from a user interface (260), a user input comprising an instruction to turn the oven door (200) from the open position (P2) to the closed position (P0);
d2. controlling (S6) the door opening unit (130) to turn the oven door (200) from the open position (P2) to the closed position (P0).
